# EUROPEAN PATENT APPLICATION

(11) **EP 2 502 835 A1**
(43) Date of publication of application: **26.09.2012**
(21) Application number: 12160673.5
(22) Date of filing: 22.03.2012
(51) Int. Cl.: B65D 1/26, B65D 1/30, B29C 51/00

(54) **Package and method of forming the same**

(30) Priority: 22.03.2011 GB 201104828
(71) Applicant: MeadWestvaco Packaging Systems, LLC, Richmond, VA 23219-0501 (US)
(72) Inventor: Le Bras, Phillippe, 36000 Chateauroux (FR)
(74) Representative: Rule, John Eric

(57) **Abstract**

A cup or vessel for holding a product such as foodstuffs or beverages, the cup or vessel comprising a hollow or tubular structure having at least one closed end there further comprising a first flange extending along opposing sides of the tubular structure and across the closed end.

## Description

### FIELD OF INVENTION

The present invention relates to a package and a method of forming the package, more specifically, but not exclusively to a package comprising a sealing flange.

### BACKGROUND OF THE INVENTION

In the field of packaging, it is often required to provide consumers with a primary package for receiving a product to be delivered to a user.

US 6,024,832 discloses a method and apparatus for producing extensible paper and which allows paper to be formed and shaped, wherein the paper can be preformed to a desired profile.

It is desirable to be able to produce packages of a variety of shape and dimensions.

It is also desirable to minimise or reduce the use of plastics materials and to manufacture the package from sustainable materials.

In particular, it is desirable to produce packages such as cups for holding beverages or foodstuffs.

Typically, such packages are produced using plastics, material such as polystyrene, polyethylene, polyethylene terephthalate, polypropylene.

A sheet of material is formed into a cup by thermoforming, vacuum forming or blow forming, where the sheet of material is heated to a pliable forming temperature and stretched over a mould.

The shape and/or dimensions of the packages formed by such techniques are limited by the stretchability or plasticity of the material and the dimensions of the sheet being stretched. This can make formation of elongate packages, packages having a substantially tubular shape with a long tubular axis and small cross-section, problematic.

### SUMMARY OF INVENTION

The present invention seeks to overcome or at least mitigate the problems of the prior art.

According to a first aspect of the present invention there is provided a cup or vessel for holding a product such as foodstuffs or beverages, the cup or vessel comprising a hollow or tubular structure having at least one closed end there further comprising a first flange extending along opposing sides of the tubular structure and across the closed end.

Preferably, there further comprises a second flange extending about a second open end of the tubular structure for receiving a lid or cover, which second flange is disposed perpendicular to the first flange.

Alternatively, the first and/or second flange are disposed inside or outside the cup or vessel.

Preferably, the cup comprises a foot or stabiliser for allowing the cup to stand upright.

Preferably, the foot or stabiliser is formed or struck from the flange.

Preferably, the cup or vessel is formed from two or more component parts secured together to seal the contents therein, preferably adhered together.

Preferably, the two or more component parts are hingedly connected to one another before being secured together.

Preferably, the cup or vessel is formed from paperboard.

Preferably, the cup or vessel further comprises a moisture resistance barrier.

Preferably, the cup or vessel is formed by thermoforming a sheet material.

Alternatively, the second flange is coupled to a second flange of one or more similar cups or vessels.

Optionally, the hollow or tubular structure defines a tubular axis and the first flange is disposed along a plane that is parallel to, or includes, the tubular axis.

According to a second aspect of the invention there is provided a package comprising a cup or vessel loaded with product and having a lid to seal the contents therein.

According to a third aspect of the present invention there is provided a method of forming a package comprising providing a sheet of material; thermoforming said sheet to form a first portion and a second portion of a container, each portion comprising a bottom, a pair of opposed sides, and one end extending between the sides and a flange extending thereabout, securing the first portion and second portions together to form a tubular structure having a closed end by securing the flanges of the first and second part to one another.

Preferably, the method of forming a package further comprises filling the package with a product.

Preferably, the method of forming a package further comprises applying a lid to the package.

Preferably, the method of forming a package further comprises constructing a foot or stabiliser upon which the package may stand upright.

Preferably, said first and second portions are hingedly connected to one another by a fold line, and the method comprises folding the first and/or second part about the fold line to bring the flanges together.

According to a fourth aspect of the present invention there is provided a method for forming a package, said package comprising a hollow structure closed at one end, having a depth defined between the closed end and an open end, and width defined between side walls of the hollow structure; the method comprising providing a sheet of material, providing a mould comprising a first part defining a first part of the side walls of the hollow structure and a first part of the closed end; and a second part defining a second part of the side walls of the hollow structure and a second part of the closed end stretching the sheet of material about the mould to form a first and second part of the package; securing the first and second parts of the package together to complete the package.

### BRIEF DESCRIPTION OF THE DRAWINGS

Exemplary embodiments of the invention will now be described with reference to the accompanying drawings, in which:
- FIGURE 1: illustrates schematically formation of a package according to a first embodiment;
- FIGURE 2: illustrates schematically formation of package according to a second embodiment;
- FIGURE 3A: illustrates schematically an apparatus in a first stage of thermoforming a package;
- FIGURE 3B: illustrates schematically the apparatus in a second stage of thermoforming a package;
- FIGURE 4A: illustrates schematically an alternative apparatus in a first stage of thermoforming a package;
- FIGURES 4B: illustrates schematically the alternative apparatus in a second stage of thermoforming a package;
- FIGURE 5A: illustrates a perspective view of a package; according to a third embodiment;
- FIGURE 5B: illustrates a perspective view of a package according to a fourth embodiment;
- FIGURE 6: illustrates a plan view of a blank for forming the package of Figures 5A;
- FIGURE 7: illustrates a plan view of a blank for forming a package of Figure 5B;
- FIGURE 8: illustrates a plan view of a blank for forming a package according to a fifth embodiment;
- FIGURE 9A: illustrates a perspective view of a part formed package of a sixth embodiment;
- FIGURE 9B: illustrates a perspective view of a part formed package of Figure 9A;
- FIGURE 9C: illustrates a perspective view of a package according to the sixth embodiment; and
- FIGURE 9D: illustrates a side view of a package according to the sixth embodiment.

### DETAILED DESCRIPTION OF EXEMPLARY EMBODIMENTS OF THE PRESENT INVENTION

Detailed descriptions of specific embodiments of the packages, blanks and cartons are disclosed herein. It will be understood that the disclosed embodiments are merely examples of the way in which certain aspects of the invention can be implemented and do not represent an exhaustive list of all of the ways the invention may be embodied. Indeed, it will be understood that the packages, blanks and cartons described herein may be embodied in various and alternative forms. The Figures are not necessarily to scale and some features may be exaggerated or minimised to show details of particular component. Well-known components, material or methods are not necessarily described in great detail in order to avoid obscuring the present disclosure. Any specific structural and functional details disclosed herein are not to be interpreted as limiting but merely as a basis for the claims and as a representative basis for teaching one skilled in the art to variously employ the invention.

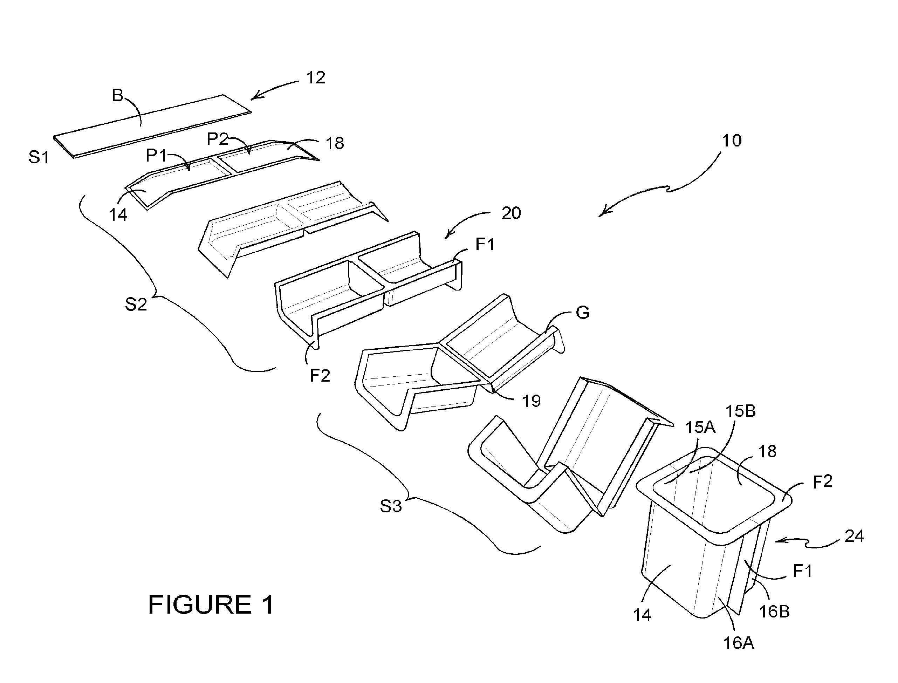

Referring to Figure 1 there is shown a perspective view of a process for forming a primary package 24, which primary package 24 is intended to contain a product such as a foodstuff or beverage.

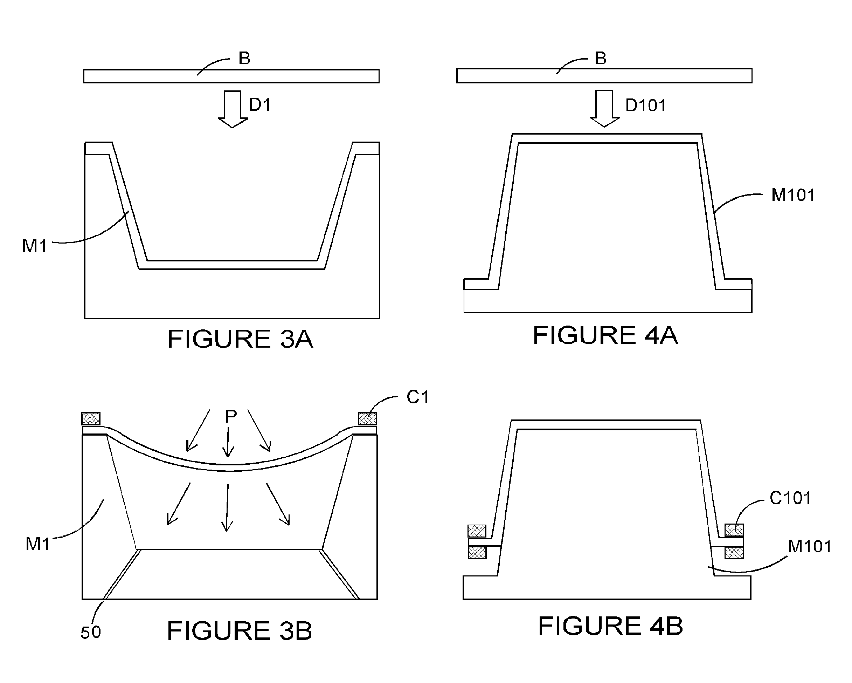

A first stage S1 is to provide a blank B. The blank B is cut from a sheet of material 12. In a second stage S2 the blank B is placed in a mould M1, M101, best illustrated in Figures 3A, 3B, 4A and 4B. The material of the blank B is stretched during the moulding process to take the form of the mould M1, M101.

In the preferred embodiment the mould M1, M101 comprises two portions, each for forming one half of the package 24. The blank B is moulded into a part formed package 20 comprising two sections P1, P2. Each section P1, P2 provides a side wall 14, 18, one half of each of the opposing end walls 15A, 16A/15B, 16B of the package 24 and one half of the base wall.

The part formed package 20 comprises a first flange F1. The first flange F1 is formed integrally with the side walls 14, 18, end walls 15A, 15B, 16A, 16B and base of the package.

The first flange F1 extends perpendicularly from an edge of each half of the base wall opposing the connection of the base wall to the respective side wall and first flange F1 extends from edges of each half of the opposing end walls 15A, 15B, 16A, 16B. Preferably, the flange F1 joins or couples the first and second part P1, P2 together.

An optional second flange F2 may be provided. Second flange F2 extends perpendicularly from upper or end edges of the opposing end walls 15A, 15B, 16A, 16B and side walls 14, 18.

Preferably the second flange F2 is formed integrally with the part-formed package 20. The second flange F2 is optionally integral with, or joined to, the first flange F1 and preferably is disposed perpendicularly thereto.

In a third stage S3 of the package formation, the first and second part P1, P2 are brought together, flange F1 extends across each half of the base wall by folding the first and second part about a fold line 19 coupling the portions.

In alternative embodiments the two sections P1, P2 of the part formed package 20 may be separated.

Adhesive, glue or sealant G is applied to the first flange F1 of one or both sections P1, P2 of the part formed package 20. The two sections P1, P2 are brought into contact with one another such that the flange F1 on the first part P1, is aligned with and secured or sealed to the flange F1 on the second part P2 to form a completed package 24.

The package 24 comprises a first flange F1 which extends across the base wall and along the length of each of the opposing side walls 16A, 16B.

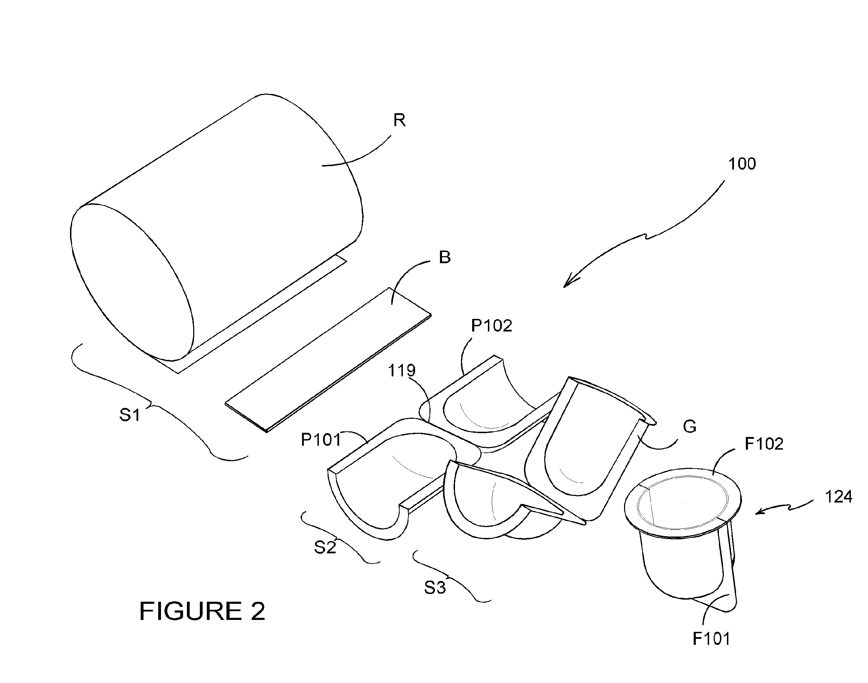

Referring now to Figures 2, 5A to 9D there is shown alternative embodiments of the present invention. In the second and third illustrated embodiment, like numerals have, where possible, been used to denote like parts, albeit with the addition of the prefix "100" or "200" and so on to indicate that these features belong to the second embodiment. The alternative embodiments share many common features with the first embodiment and therefore only the differences from the embodiment illustrated in Figure 1 will be described in any greater detail.

Figure 2 illustrates a formation of a second embodiment in which the cup or vessel formed comprises a substantially cylindrical shape in which the base is dome shaped. First flange F101 extends along opposing sides of the cylindrical walls and across the base.

The blank B is cut from a roll of sheet material R prior to formation by thermoforming.

Figure 3A and 3B illustrate thermoforming the blank B into the part formed package 20, 120. Blank B is brought into contact with an upper surface of a mould M1 as indicated by direction arrow D1. Figures 3A and 3B illustrate use of negative mould M1.

The blank B is then forced into the shape of the mould M1; this may be achieved by pressing the blank B into the mould M1 with a punch (not shown). Alternatively, the blank B may be clamped in position using a clamp C1, see Figure 3B. The blank B may be forced into the shape of the mould M1 either by blowing P the sheet into the mould M1 or alternatively by using a vacuum pump which communicates with the space between the mould M1 and the blank B and the pump via conduits 50.

Figures 4A and 4B illustrate use of a positive mould M101. The preferred package may be formed by stretching the sheet material over the positive mould M101.

The edges of the blank B may be clamped in a clamp C101 whilst the blank is stretched over the mould M101 to facilitate formation of the part formed package 20, 120.

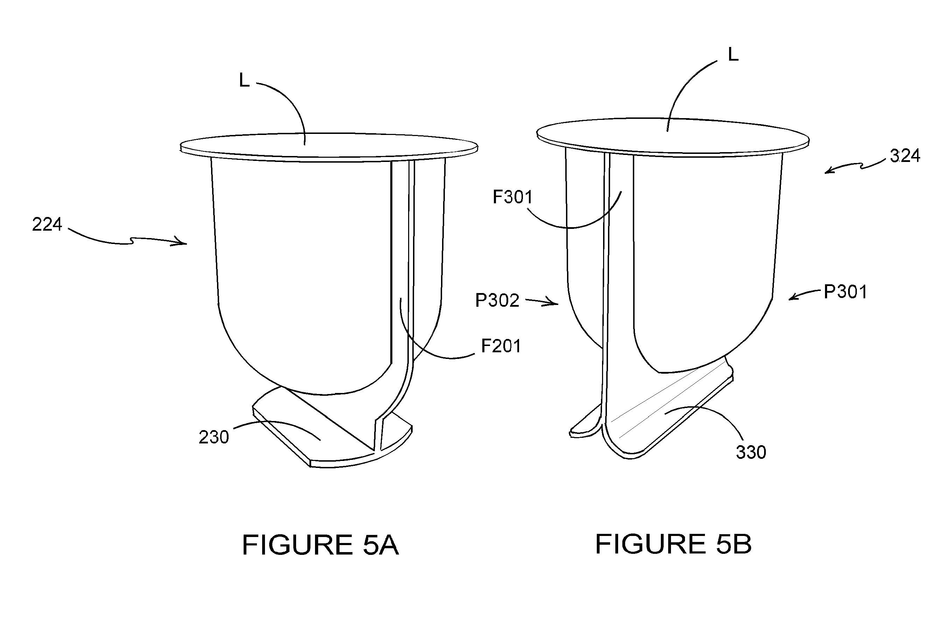

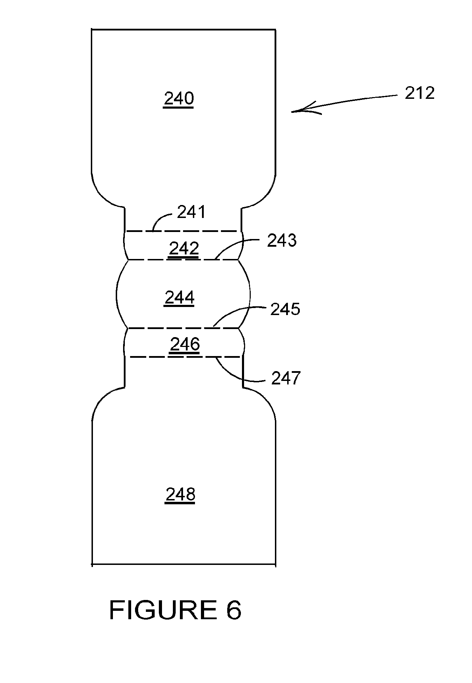

Figure 5A illustrates a third embodiment of the present invention in which the package 224 comprises a foot or stabiliser 230 in order to allow the package 224 to stand in an upright position. The package 224 also comprises a lid L which has been affixed to the second flange. The package 224 is constructed using the blank 212 illustrated in Figure 6. The blank 212 comprises a pair of main panels 240, 248 from which the side walls, end walls, base wall, first flange and second flange F201 of the package 224 are constructed. The main panels 240, 248 are connected by stabiliser panels 242, 244, 246 which are hingedly connected in a linear series between the main panels 240, 242. First stabiliser panel 242 is coupled to main panel 240 by fold line 241 and to second stabiliser panel 244 by fold line 243. Second stabiliser panel 244 is coupled to third stabiliser panel 246 by fold line 245. Third stabiliser panel 246 is coupled to second main panel 248 by fold line 247.

Once the main panels 240, 248 have been formed into the desired shape to form the side, end and base walls of the package 224, the first main panel 240 and first stabiliser panel 242 are folded about fold line 243 so as to overlay the second and third stabiliser panels 244, 246 and main panel 248. First main panel 240 is then folded back about fold line 241 to overlay first stabiliser panel 242. Adhesive is then applied to the first flange F201 shown in Figure 5A of either or both main panels 240, 248. The second main panel 248 and third stabiliser panel 246 are then folded about fold line 245. The main panels 240, 248 are then folded to be perpendicular to the first, second and third stabiliser panels 242, 244, 246.

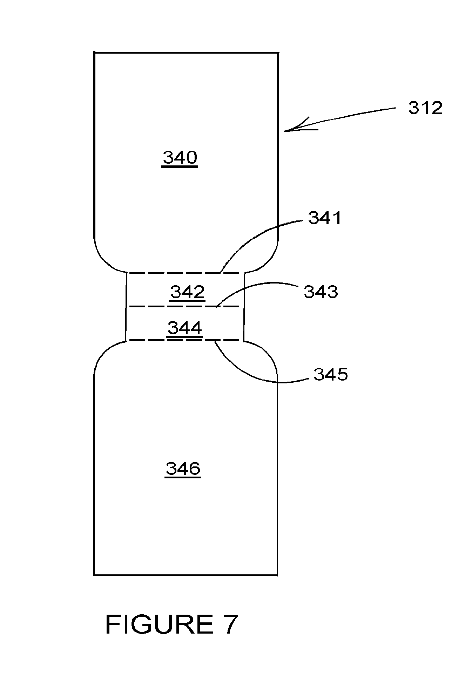

Figure 5B illustrates a package 324 according to a fourth embodiment of the present invention, in which the package 324 comprises a foot or stabiliser 330 in order to allow the package 324 to stand in an upright position. The package 324 is formed from the blank 312 of Figure 7; the blank 312 comprises a pair of main panels 340, 346 interconnected by a pair of strut panels 342, 344. The main panels 340, 346 are moulded to form the side, end, base walls, first flange and second flange F301 of the package 324.

Adhesive is applied to the first flange F301 of one or both of the main panels 340, 346. Adhesive is not applied to a lowermost portion, adjacent the strut panels 342, 344 of each the first flanges F301 of the first and second portions P301, P302 such that these portions may be folded outwardly away from one to form an inverted V shape. The folded portions of the first flange F301 form legs upon which the package 324 can rest in an upright position. The lowermost portions of each of the first flanges F301 may comprise one or more fold lines, not shown, which define, in part, the legs and facilitate folding the lowermost portions outwardly.

The strut panels 342, 344 may be folded about fold line 343 to be placed in overlapping relationship with one another and fold lines 341, 345 to be placed in overlapping relationship with, and disposed between, the lowermost portions of each of the first flanges F301 when the legs are not in use.

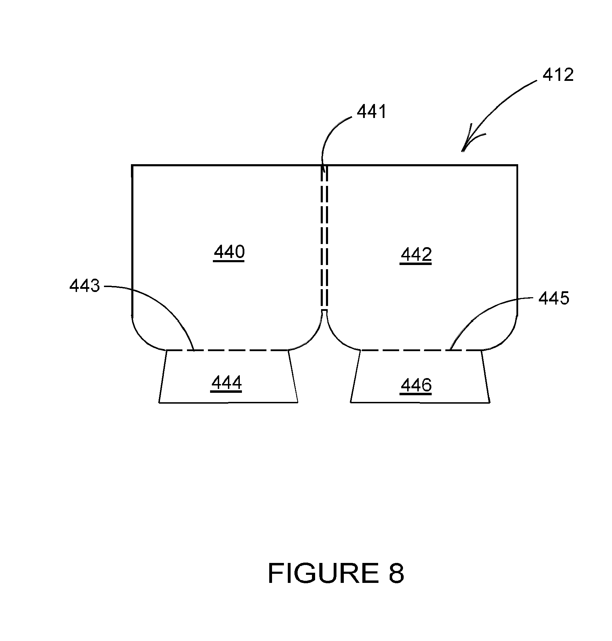

Figure 8 illustrates a blank 412 for forming a package according to a fifth embodiment of the present invention; the blank 412 comprises a pair of main panels 440, 442. The main panels 440, 442 are hingedly connected together by fold line 441, which extends along a side edge thereof, by regions which form the part of the first flange which extends along one of the side or end walls of the package.

A foot panel 444, 446 is attached to each of the main panels 440, 442 along an end edge by a respective fold line 443, 445.

The side, end and base walls of the package are formed from the main panels 440, 442 by thermoforming, as described above.

Once the side, end and base walls of the package have been formed, the two halves are secured together by adhering the first flanges of each half of the package together; no adhesive is applied to the foot panels 444, 446.

The package can be filled with a product and, if desired, a lid can be applied preferably by securing to the second flange.

When it is desired, for example when an end user wishes to consume the product, the foot panels 444, 446 can be folded to be perpendicular to the first flange so as to be coplanar with one another. In this way this foot panels 444, 446 provide a stable base for the package, which can be deployed when desired.

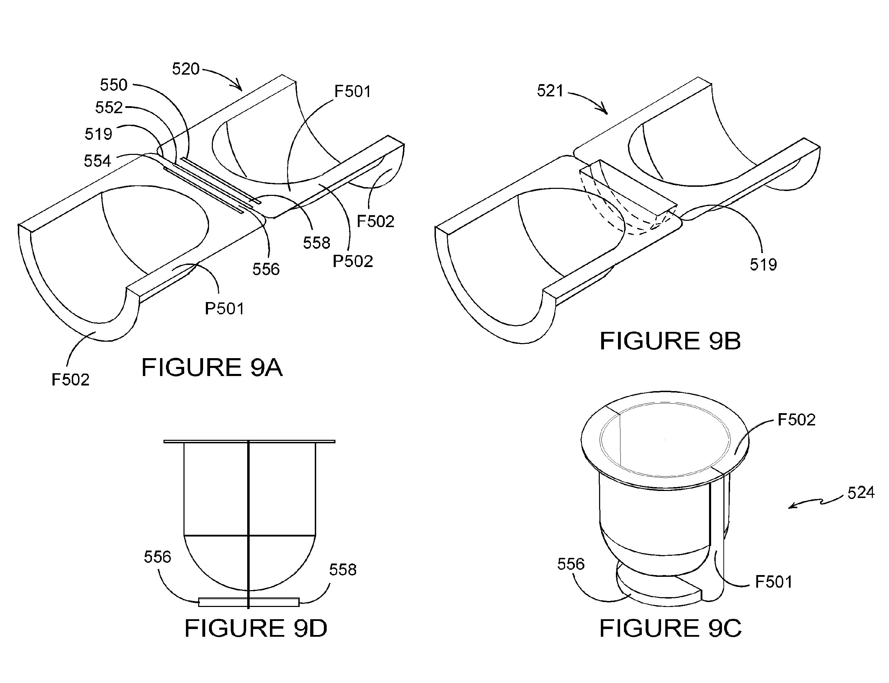

Figures 9A to 9D illustrate a sixth embodiment of the invention in which a foot or stabiliser 556, 558 is thermoformed along with the side, end and base walls of the package 524. The package 524 is formed from a blank having main panels for forming each half P501, P502 of the package 524. The two halves P501, P502 are coupled together; each of the first flanges F501 are hinged together by a fold line 519. The fold line 519 is interrupted by a cut line or weakened line of severance 552. A second cut line or weakened line 550, 554 is formed in the first flange F501 of each of the first and second parts P501, P502. The second cut lines 550, 554 are parallel to the first cutline 552 and define therebetween foot forming regions 556, 558 of the blank. These foot forming regions 556, 558 can be thermoformed either separately or preferably at the same time as the side, end and base walls are formed. The two sections P501, P502 of the part formed package 521 can then be folded about fold line 519 and secured together. In this embodiment the foot forming regions 556, 558 are each moulded into a substantially semi circular shape although in alternative embodiments other shapes are envisaged. The package can stand at rest upon end edges of the foot forming regions 556, 558 which are defined, in the blank, by cut line 552.

It is envisaged that the packages will be formed from sheet material, preferably paperboard, which can be thermoformed into desired shapes. An example of paperboard useful with the invention is disclosed in US Patent No. 6,024,832 which is hereby incorporated by reference.

It is also envisaged that the paperboard may be coated with a moisture resistant barrier or specific gas barrier to seal the package when utilised with foodstuffs or beverages. This coating may be formed from plastics material, such as but not limited to polyethylene or polylactic acid.

It is envisaged that the package will comprise a lid to seal the contents within the package. The lid may be formed from coated paperboard, aluminium or plastic.

An advantage of the invention is that it allows formation of packages having wide variety of shapes.

Known thermoformed trays or packages typically have a depth to area ration of up to 0.6, where area refers to the dimension of the area of the top of the open end of the package, and the depth refers to the dimension between the open top and the base. The present invention allows formation of packages having depth to area ratios in excess of 0.6, in excess of 1, in excess of 2, and in excess of 2.5, preferably 2.65.

For example the present invention can form a cup having a top area of 2375 mm² and a depth of 63mm, having a depth to area ratio 2.65, which cup has a capacity of 125cl, whereas known trays or packages with a capacity of 125cl would typically require an area of 48830 mm² and a depth of 38 mm, depth to area ratio of 0.08.

It will be appreciated that, unlike known techniques, the cup or vessel of the present invention is not formed by stretching a sheet of material from the top of the cup to the bottom of the cup, but rather the cup is formed by stretching the sheet of material or blank one half of a dimension perpendicular to the depth of the cup or package, for example half of the length dimension of the side or end wall.

It can be appreciated that various changes may be made within the scope of the present invention, for example, the size and shape of the panels and apertures may be adjusted to form articles of differing size or shape.

It will be recognised that as used herein, directional references such as "top", "bottom", "front", "back", "end", "side", "inner", "outer", "upper" and "lower" do not limit the respective panels to such orientation, but merely serve to distinguish these panels from one another. Any reference to hinged connection should not be construed as necessarily referring to a single fold line only; indeed it is envisage that hinged connection can be formed from one or more of the following, a short slit, a frangible line or a fold line without departing from the scope of the invention.

## Claims

1. A cup or vessel for holding a product such as foodstuffs or beverages, the cup or vessel comprising a hollow or tubular structure having at least one closed end there further comprising a first flange extending along opposing sides of the tubular structure and across the closed end.

2. The cup or vessel according to either of claims 1 or 2, wherein there further comprises a second flange extending about a second open end of the tubular structure for receiving a lid or cover, which second flange is disposed perpendicular to the first flange.

3. The cup or vessel according to claim 1 wherein the first and/or second flange are disposed inside or outside the cup or vessel.

4. The cup or vessel according to any of claims 1 to 4 wherein the cup comprises a foot or stabiliser for allowing the cup to stand upright.

5. The cup or vessel according to claim 4, wherein the foot or stabiliser is formed or struck from the flange.

6. The cup or vessel according to any of claims 1 to 5, wherein the cup or vessel is formed from two or more component parts secured together to seal the contents therein, preferably adhered together.

7. The cup or vessel according to claim 6, wherein the two or more component parts are hingedly connected to one another before being secured together.

8. The cup or vessel according to any of claims 1 to 7, wherein the cup or vessel is formed from paperboard.

9. The cup or vessel according to any of claims 1 to 8, further comprising a moisture resistance barrier.

10. The cup or vessel according to any of claims 1 to 9, formed by thermo forming a sheet material.

11. The cup or vessel according to claim 2 wherein the second flange is coupled to a second flange of one or more similar cups or vessels.

12. The cup or vessel according to claim 1 or 2, wherein the hollow or tubular structure defines a tubular axis, and wherein the first flange is disposed along a plane that is parallel to, or includes, the tubular axis.

13. A package comprising a cup or vessel according to any preceding claim, loaded with product and having a lid to seal the contents therein.

14. A method of forming a package comprising
providing a sheet of material;
thermoforming said sheet to form a first portion and a second portion of a container, each portion comprising a bottom, a pair of opposed sides, and one end extending between the sides and a flange extending thereabout;
securing the first portion and second portions together to form a tubular structure having a closed end by securing the flanges of the first and second part to one another.

15. A method of forming a package according to claim 14 further comprising filling the package with a product.

16. A method of forming a package according to claims 14 or 15 further comprising applying a lid to the package.

17. A method of forming a package according to any of claims 14 to 16 further comprising constructing a foot or stabiliser upon which the package may stand upright.

18. A method of forming a package according to any of clams 14 to 17 wherein said first and second portions are hingedly connected to one another by a fold line and the method comprises folding the first and/or second part about the fold line to bring the flanges together.

19. A method for forming a package, said package comprising a hollow structure closed at one end, having a depth defined between the closed end and an open end, and width defined between side walls of the hollow structure;
the method comprising;
providing a sheet of material;
providing a mould comprising
a first part defining a first part of the side walls of the hollow structure and a first part of the closed end; and
a second part defining a second part of the side walls of the hollow structure and a second part of the closed end;
stretching the sheet of material about the mould to form a first and second part of the package;
securing the first and second parts of the package together to complete the package.
